Europäisches Patentamt

European Patent Office

Office européen des brevets

(19)

(11) Veröffentlichungsnummer: **0 160 750 B1**

(12) # EUROPÄISCHE PATENTSCHRIFT

(45) Veröffentlichungstag der Patentschrift:
**22.03.89**

(51) Int. Cl.⁴: **B 60 T 13/68**

(21) Anmeldenummer: **84116357.9**

(22) Anmeldetag: **27.12.84**

(54) **Drucksteuerventil für eine Druckmittel-Bremsanlage.**

(30) Priorität: **12.04.84 DE 3413759**

(43) Veröffentlichungstag der Anmeldung:
**13.11.85 Patentblatt 85/46**

(45) Bekanntmachung des Hinweises auf die Patenterteilung:
**22.03.89 Patentblatt 89/12**

(84) Benannte Vertragsstaaten:
**DE FR IT NL SE**

(56) Entgegenhaltungen:
**DE-A- 3 215 475**
**DE-U- 1 888 850**

(73) Patentinhaber: **ROBERT BOSCH GMBH, Postfach 50, D-7000 Stuttgart 1 (DE)**

(72) Erfinder: **Stumpe Werner, Goerdelerstrasse 10, D-7014 Kornwestheim (DE)**

ACTORUM AG

**Beschreibung**

Die Erfindung betrifft ein Drucksteuerventil für eine Druckmittel-Bremsanlage, insbesondere Druckluftbremsanlage, der im Oberbegriff des Anspruchs 1 angegebenen Gattung.

Bei diesem bekannten Drucksteuerventil wird der Steuerdruck mittels eines Pilotventils eingestellt, das als Proportional-Magnetventil ausgebildet ist und den Steuerdruck für das Relaisventil in Abhängigkeit von ihm als elektrische Signale zugeführten Fahrzeugparametern einsteuert. Ein solches Drucksteuerventil hat den Vorteil, analoge elektrische Bremssignale in eine direkte Druckzumessung für die Bremszylinder umzusetzen, wobei in günstiger Weise eine ergänzende Ansteuerung mit sog. ABS- (Antiblockiersystem)-Signalen oder ALB- (achslastabhängige Bremskraft)Signalen möglich ist. Nicht zu vermeiden sind jedoch gewisse Ansteuerungsverzögerungen durch den notwendigen Aufbau des Steuerdrucks für das Relaisventil in dem Pilotventil in Abhängigkeit von diesen Signalen.

Durch die DE-A-3 215 475 ist ebenfalls ein gattungsgleiches Drucksteuerventil bekannt, bei dem ein vom Bremsventil druckbetätigter Schaltkolben und ein Anker eines Elektromagneten hintereinander geschaltet sind, um das Ventil zu betätigen. Bei dieser bekannten Bauart wirkt aber der Elektromagnet in der gleichen Richtung wie der Bremsventildruck am Schaltkolben. Damit kann dann nur eine Entweder-Oder-Steuerung durchgeführt werden. Eine genaue Ventileinstellung bzw. -regelung ist mit der bekannten Bauart nicht möglich.

Der Erfindung liegt die Aufgabe zugrunde, diesen Nachteil zu vermeiden und ein Drucksteuerventil zu schaffen, mit dem der ausgesteuerte Druck genau ausregelbar und an die entsprechenden Fahrzeugparameter anpaßbar ist.

Diese Aufgabe wird gemäß der Erfindung bei dem gattungsgemäßen Drucksteuerventil durch die kennzeichnenden Merkmale des Patentanspruchs gelöst.

Das erfindungsgemäße Drucksteuerventil mit den kennzeichnenden Merkmalen des Anspruchs 1 hat den Vorteil, daß der Steuerdruck nicht in Abhängigkeit von elektrischen Signalen der Fahrzeugparameter verändert wird und damit im Steuerraum ein ungehinderter Druckauf- und -abbau ohne Zeitverlust möglich ist. Durch die zusätzliche Stellglied-Steuerung des Steuerkolbens kann jede beliebige Abhängigkeit des Auslaßdrucks von dem Steuerdruck erzielt werden. Bei Ausfall der Stellgliedansteuerung und damit Wegfall der Stellkraft ist automatisch eine pneumatische Drucksteuerung mittels des Bremspedals als Notfunktion gegeben.

Das Drucksteuerventil ist kompakt und einfach im Aufbau, robust und wenig störanfällig. Bei Sensierung des Drucks am Auslaß des Drucksteuerventils und Umwandlung in ein elektrisches Signal läßt sich das erfindungsgemäße Drucksteuerventil unmittelbar zur Bremsdruckregelung verwenden.

Vorteilhafte Ausführungsformen des erfindungsgemäßen Drucksteuerventils ergeben sich aus den weiteren Ansprüchen.

Eine vorteilhafte Ausführungsform der Erfindung ergibt sich dabei aus Anspruch 2. Wird das Drucksteuerventil zur ALB-Regelung verwendet, so ist es vorteilhaft, die Stellgliedansteuerung – und damit die Stellkraft – in Abhängigkeit vom Steuerdruck einerseits und der sensierten Achslast andererseits einzustellen.

Eine vorteilhafte Ausführungsform der Erfindung ergibt sich aus Anspruch 3, insbesondere in Verbindung mit den Ansprüchen 4 und 5. Durch diese Maßnahmen wird eine konstruktiv vorteilhafte Gestaltung des Drucksteuerventils mit extrem kleinen Steuerzeiten und zeitverkürzenden Durchlaßquerschnitten erzielt.

Zeichnung

Die Erfindung ist anhand der Zeichnung dargestellter Ausführungsbeispiele im folgenden näher beschrieben. Es zeigen:

Fig. 1 ein Blockschaltbild einer Druckluftbremsanlage mit einem schematisch im Längsschnitt dargestellten Drucksteuerventil,

Fig. 2 einen Längsschnitt des konstruktiv ausgebildeten Drucksteuerventils in Fig. 1.

Beschreibung der Ausführungsbeispiele

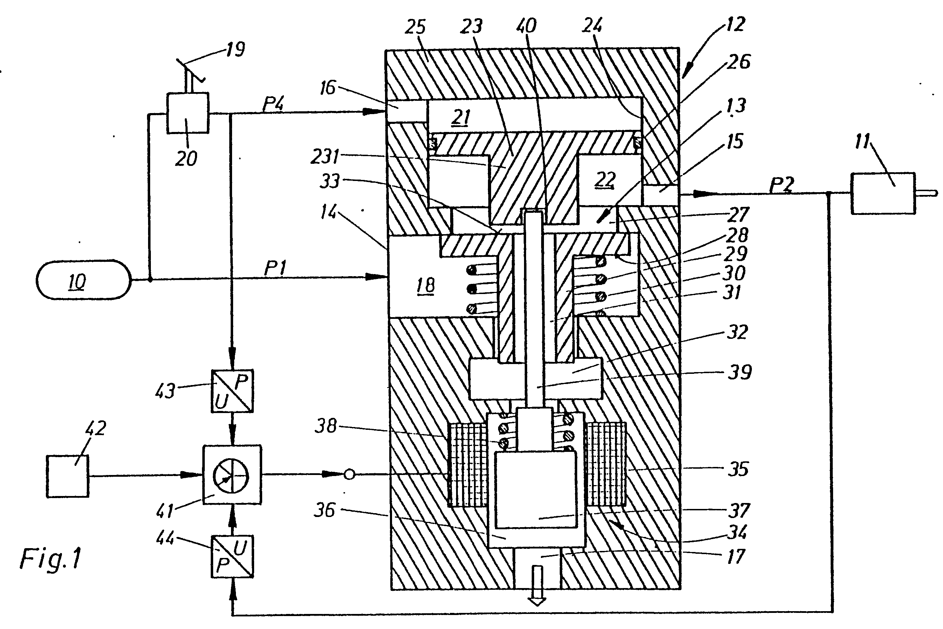

Die in Fig. 1 im Blockschaltbild dargestellte Druckluftbremsanlage als Beispiel einer Druckmittel-Bremsanlage umfaßt einen Druckluft-Vorratsbehälter 10, der ständig auf einem Druck $p_1$ gehalten wird, mindestens einen Bremszylinder 11 und ein zwischen Druckluft-Vorratsbehälter 10 und Bremszylinder 11 eingeschaltetes Drucksteuerventil 12.

Das Drucksteuerventil 12 weist ein Relaisventil 13 mit einem Einlaß 14, einem Auslaß 15, einem Steuerdruck-Eingang 16 und einem Entlüftungsausgang 17 auf. An dem Einlaß 14 ist der Druckluft-Vorratsbehälter 10 angeschlossen, so daß eine an dem Einlaß 14 sich anschließende Ventileinlaßkammer 18 stets mit dem Vorratsdruck $p_1$ beaufschlagt ist. Am Steuerdruckeingang 16 ist der Ausgang eines von einem Bremspedal 19 betätigten Betriebsbremsventils 20 verbunden, das andererseits an dem Druckluft-Vorratsbehälter 10 angeschlossen ist. In einer mit dem Steuerdruckeingang 16 verbundenen Steuerkammer 21 herrscht damit ein vom Betriebsbremsventil 20 je nach Betätigung des Bremspedals eingesteuerter Steuerdruck $p_4$. An dem Auslaß 15 des Relaisventils 13 ist der Bremszylinder 11 angeschlossen. Dem Bremszylinder 11 wird der Ausgangsdruck $p_2$ zugeführt, der mittels des Drucksteuerventils 12 in einer mit dem Auslaß verbundenen Ventilauslaßkammer 22 eingestellt wird.

Steuerkammer 21 und Ventilauslaßkammer 22 werden von einem Steuerkolben 23 voneinander getrennt, der in einer Bohrung 24 des Ventilkörpers 25 des Drucksteuerventils 12 axial verschieblich geführt ist. Eine Dichtung 26 im Steuerkolben 23 trennt die Steuerkammer 21 hermetisch von der Ventilauslaßkammer 22. Zwischen der Ventileinlaßkammer 18 und der Ventilauslaßkammer 22 ist eine Axialbohrung 27 vorgesehen, die auf der zur Ventileinlaßkammer 18 zugekehrten Stirnseite von einem Einlaßventilsitz 28 umgeben ist, auf welchem ein Ventilglied 29 unter der Wirkung einer Ventilschließfeder 30 aufliegt. Das Ventilglied 29 weist eine durchgehende mittlere Bohrung 31 auf, über welche die Ventilauslaßkammer 22 mit einer Entlüftungskammer 32 verbunden ist, die wiederum mit dem Entlüftungsausgang 17 in Verbindung steht. An dem der Ventilauslaßkammer 22 zugekehrten Ende der Bohrung 31 ist diese von einem Auslaßventilsitz 33 umgeben, der mit einem zapfenförmigen Fortsatz 231 des Steuerkolbens 23 zusammenwirkt. Bei Auflage des Fortsatzes 231 auf dem Auslaßventilsitz 33 ist die Verbindung zwischen der Ventilauslaßkammer 22 und der Entlüftungskammer 32 unterbrochen.

Im unteren Teil des Ventilkörpers 25 des Drucksteuerventils 12 ist als zusätzliches Stellglied für den Steuerkolben 23 ein Elektromagnet 34 mit einer Erregerwicklung 35 und einem in einer Bohrung 36 axial verschieblich geführten Magnetanker 37 angeordnet. Der Magnetanker 37 wird im stromlosen Zustand des Elektromagneten 34 von einer Rückstellfeder 38 in seiner in Fig. 1 dargestellten Grundstellung gehalten. An dem Magnetanker 37 ist ein Stößel 39 befestigt, der die Entlüftungskammer 32 und die mittlere Bohrung 31 des Ventilglieds 29 durchdringt und in eine Ausnehmung 40 in der Stirnseite des Fortsatzes 231 des Steuerkolbens 23 hineinragt. Der Erregerstrom für die Erregerwicklung 35 wird von einer Steuerelektronik 41 geliefert. Die an sich bekannte Steuerelektronik 41 stellt die Größe des Erregerstroms in Abhängigkeit von verschiedenen Fahrzeugparametern entsprechend einer gewünschten Steuerkennlinie des Drucksteuerventils 12 ein.

In dem in Fig. 1 dargestellten Ausführungsbeispiel ist eine achslastabhängige Bremsdruckregelung (ALB-Regelung) vorgesehen. Hierzu ist der Steuerelektronik 41 das elektrische Ausgangssignal eines Lastsensors 42 und das elektrische Ausgangssignal eines Druckwandlers 43 zugeführt, dessen Eingang mit dem Steuerdruck $p_4$ beaufschlagt ist. Aus diesen beiden Parametern erzeugt die Steuerelektronik 41 einen Erregerstrom bestimmter Größe für die Erregerwicklung 35 des Elektromagneten 34. Wird eine Regelung des dem Bremszylinder 11 zugeführten Ausgangsdruckes $p_2$ gewünscht, so kann dieser Druck sensiert werden und über einen Druckwandler 44 in eine druckproportionale elektrische Eingangsgröße für die Steuerelektronik 41 umgewandelt werden. In gleicher Weise können auch ABS-Signale, die aus dem Schlupf des von dem Bremszylinder 11 gebremsten Rades abgeleitet sind, der Steuerelektronik 41 zugeführt werden.

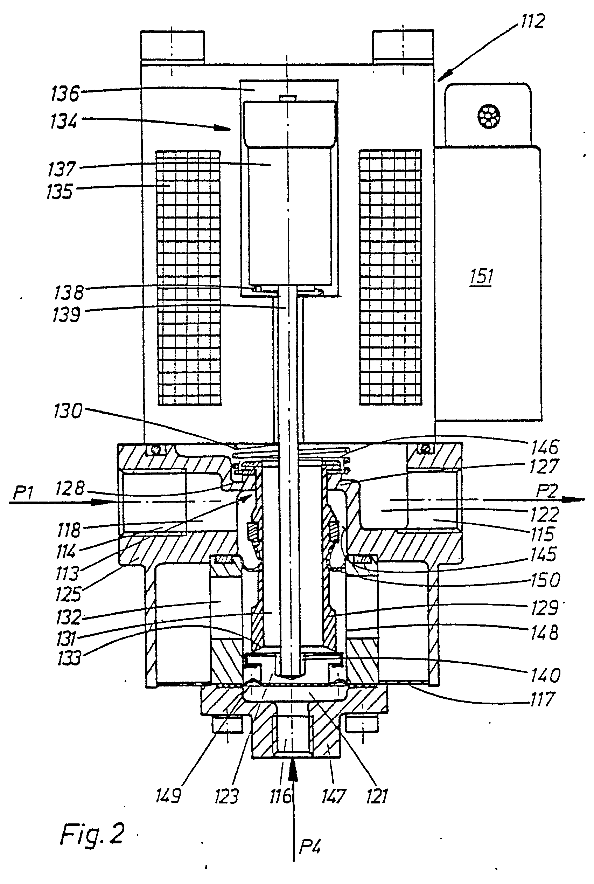

In Fig. 2 ist eine konstruktiv vorteilhafte Ausführungsform des in Fig. 1 schematisch dargestellten Drucksteuerventils 12 im Längsschnitt dargestellt. Aufbau bzw. Funktionsweise dieses Drucksteuerventils 112 ist im wesentlichen gleich dem in Fig. 1, so daß gleiche Bauteile mit gleichen Bezugszeichen gekennzeichnet sind, die jedoch zur Unterscheidung jeweils um 100 erhöht sind.

Bei dem Drucksteuerventil 112 ist das Ventilglied 129 rohrförmig ausgebildet und in einer von der Stirnseite des Ventilkörpers 125 ausgehenden Axialbohrung 145 zusammen mit dem Steuerkolben 123 angeordnet. An dem einen Ende ragt das rohrförmige Ventilglied 129 durch die Axialbohrung 127 zwischen Ventileinlaßkammer 118 und Ventilauslaßkammer 122 und trägt an diesem Ende einen Flansch 146, der mit dem Einlaßventilsitz 128 zusammenwirkt. Am anderen Ende trägt das Ventilglied 129 den Auslaßventilsitz 133, auf dem der in der Axialbohrung 145 verschieblich geführte Steuerkolben 123 aufsitzt. Die Stirnseite der Axialbohrung 145 ist von einem Deckel 147 abgeschlossen, der die hier kleinvolumige Steuerkammer 121 und den Steuerdruckeingang 116 aufweist. Die Entlüftungskammer 132 ist etwa im mittleren Bereich des Ventilgliedes 129 angeordnet und steht über Radialbohrungen 148 mit der Axialbohrung 145 in Verbindung. Die Entlüftungskammer 132 ist einerseits durch eine Dichtung 149 von der Steuerkammer 121 und andererseits durch eine Dichtung 150 von der Ventileinlaßkammer 118 luftdicht getrennt. Die Dichtungen 149, 150 sind als Membrandichtungen ausgeführt, die jeweils am Ventilkörper 125 einerseits und am Steuerkolben 123 bzw. am rohrförmigen Ventilglied 129 andererseits befestigt sind. Der Stößel 139 des Elektromagneten 134 geht durch das Innere des rohrförmigen Ventilglieds 129 hindurch und ragt mit seinem freien Ende wiederum in die Ausnehmung 140 im Steuerkolben 123 hinein. Einlaß 114 und Auslaß 115 des im unteren Teil des Ventilkörpers 125 enthaltenen Relaisventils 113 sind mit großem Öffnungsquerschnitt ausgebildet, so daß zeitverkürzende Durchlaßquerschnitte für die Arbeitsluft zur Verfügung stehen. Die Steuerelektronik 41 zur Ansteuerung des im oberen Teil des Ventilkörpers 125 angeordneten Elektromagneten 134 ist in einem Gehäuse 151 untergebracht, das direkt am Ventilkörper 125 befestigt ist.

Die Wirkungsweise des Drucksteuerventils ist im folgenden anhand der Fig. 2 dargestellten Ausführungsform beschrieben:

Bei stromlosem Elektromagneten 134 wirkt das Drucksteuerventil 112 wie ein bekanntes Relaisventil. Der von dem Betriebsbremsventil 20 eingesteuerte Steuerdruck $p_4$ bewirkt, daß sich der Steuerkolben 123 zunächst auf den Auslaßventilsitz 133 aufsetzt und die Verbindung zwischen der Ventilauslaßkammer 122 und dem Entlüftungsausgang 117, die durch das Innere des rohrförmigen Ventilgliedes 129 hindurchführt, verschlossen wird. Danach wird der Ventilkörper 129 in Fig. 2 nach oben verschoben, so daß der Flansch 146 von dem Einlaßventilsitz 128 abhebt. Nunmehr strömt Druckluft von der Ventileinlaßkammer 118 in die Ventilauslaßkammer 122. Der in der Ventilauslaßkammer 122 eingesteuerte Ausgangsdruck $p_2$ steht über das Innere des rohrförmigen Ventilgliedes 129 auch an dem Steuerkolben 123 an. Ist der eingesteuerte Ausgangsdruck $p_2$ zu hoch, so hebt der Steuerkolben 123 vom Auslaßventilsitz 133 ab und Luft strömt ins Freie bis sich am Steuerkolben 123 der Steuerdruck $p_4$ und der Ausgangsdruck $p_2$ ausgewogen haben. Im ausgewogenen Zustand sitzt sowohl der Steuerkolben 123 auf dem Auslaßventilsitz 133 als auch der Flansch 146 auf dem Einlaßventilsitz 128. Der Ausgangsdruck $p_2$ wird somit proportional dem vom Betriebsbremsventil 20 erzeugten Steuerdruck $p_4$ gesteuert.

Wird der Elektromagnet 134 erregt, so wird der Magnetanker 137 in Fig. 2 nach unten axial verschoben. Über den Stößel 139 wird dabei der Steuerkolben 123 von dem Auslaßventilsitz 133 abgehoben und damit das Druckgleichgewicht am Steuerkolben 123 gestört. Nunmehr strömt Luft von der Ventilauslaßkammer 122 ins Freie, solange, bis sich am Steuerkolben 123 wieder ein neues Druckgleichgewicht auf niedrigerem Druckniveau eingestellt hat. Bei konstant eingestellter Magnetkraft kann dann wiederum der Ausgangsdruck $p_2$ proportional dem Steuerdruck $p_4$ gesteuert werden. Es ist ohne weiteres ersichtlich, daß je nach Größe der Magnetkraft beliebige Kennlinienformen der Funktion $p_2 = f(p_4)$ erzielbar sind.

## Patentansprüche

1. Drucksteuerventil für eine Druckmittel-Bremsanlage, insbesondere Druckluftbremsanlage, mit einem druckmittelgesteuerten Relaisventil, das einen mit einem vom Bremspedal eingesteuerten Steuerdruck beaufschlagbaren Steuerkolben aufweist, der die Verbindung zwischen einem Auslaß zum Anschluß mindestens eines Bremszylinders und einem Einlaß zum Anschluß einer Druckmittelquelle einerseits und einem Entlüftungsausgang andererseits steuert, dadurch gekennzeichnet, daß mit dem Steuerkolben (23; 123) ein elektrisch betätigbares Stellglied (Elektromagnet 34; 134) mit steuerbarer Stellkraft mechanisch gekoppelt ist und daß dessen Stellkraft dem Steuerdruck ($p_4$) entgegenwirkt.

2. Ventil nach Anspruch 1, dadurch gekennzeichnet, daß die Stellkraft, vorzugsweise der Erregerstrom des Elektromagneten (34; 134), in Abhängigkeit von Fahrzeugparametern, wie Achslast, Bremsdruck, Steuerdruck, mittels einer Steuerelektronik (41) einstellbar ist.

3. Ventil nach Anspruch 1 oder 2, dadurch gekennzeichnet, daß das Relaisventil (113) ein entgegen der Kraft einer Ventilschließfeder (130) verschiebliches rohrförmiges Ventilglied (129) aufweist, das einen nahe dem einen Ende abstehenden Flansch (146), der mit einem in der Verbindung zwischen Einlaß (114) und Auslaß (115) liegenden Einlaßventilsitz (128) zusammenwirkt, und einen am anderen Ende angeordneten Auslaßventilsitz (133) aufweist, der mit dem Steuerkolben (123) zusammenwirkt, und daß am Stellglied, vorzugsweise am Elektromagneten (134), ein durch das rohrförmige Ventilglied (129) etwa zentral hindurchgeführter Stößel (139) befestigt ist, der endseitig in eine Ausnehmung (140) im Steuerkolben (123) hineinragt.

4. Ventil nach Anspruch 3, dadurch gekennzeichnet, daß Ventilglied (129) und Steuerkolben (123) in einer Bohrung (145) eines Ventilkörpers (125) längs verschieblich angeordnet sind, daß der Ventilkörper (125) etwa im mittleren Bereich des Ventilgliedes (129) mindestens eine in der Bohrung (145) mündende Radialbohrung (148) aufweist, die mit dem Entlüftungsausgang (117) in Verbindung steht, und daß zwischen Ventilkörper (125) und Steuerkolben (123) einerseits und zwischen Ventilkörper (125) und Ventilschließglied (123) andererseits jeweils eine den Entlüftungsausgang (117) von einer mit dem Steuerdruck ($p_4$) beaufschlagten Steuerkammer (121) einerseits und von dem Einlaß (114) andererseits trennende Dichtung (149, 150) vorgesehen ist.

5. Ventil nach Anspruch 4, dadurch gekennzeichnet, daß die Steuerkammer (121) kleinvolumig und der Ein- und Auslaß (14, 15) mit großem Öffnungsquerschnitt ausgebildet sind.

6. Ventil nach einem der Ansprüche 2–5, dadurch gekennzeichnet, daß die Steuerelektronik (141) mit dem Ventilkörper (125) räumlich verbunden ist.

## Claims

1. Pressure control valve for a compress-medium-operated brake installation, in particular air brake installation, having a compressed-medium controlled relay valve which has a control plunger which can be subjected to the control pressure input by the brake pedal and controls the connection between an outlet for the connection of at least one brake cylinder and an inlet for the connection of a compressed-medium source, on the one hand, and a bleed orifice on the other, characterized in that an electrically actuable control member (electromagnet 34; 134) having a controllable actuating force is mechanically coupled to the control plunger (23; 123) and in that the actuating force of the control member works against the control pressure ($p_4$).

2. Valve according to Claim 1, characterized in that the actuating force, preferably the exciting current of the electromagnet (34; 134), can be adjusted by means of an electronic control device (41) as a function of the vehicle parameters, such as axle load, brake pressure, control pressure.

3. Valve according to Claim 1 or 2, characterized in that the relay valve (113) has a tubular valve member (129) which can be displaced counter to the force of a valve closing spring (130), which valve member has a flange (146) which protrudes near to one end and cooperates with an inlet valve seat (128) situated in the connection between inlet (114) and outlet (115), and which valve member has an outlet valve seat (133) which is arranged at the other end and co-operates with the control plunger (123), and in that a tappet (139) which is passed approximately centrally through the tubular valve member (129) and at the end projects into a recess (140) in the control plunger (123) is fixed to the control member, preferably to the electromagnet (134).

4. Valve according to Claim 3, characterized in that valve member (129) and control plunger (123) are arranged so as to be longitudinally displaceable in a bore (145) of a valve body (125), in that, approximately in the central region of the valve member (129), the valve body (125) has at least one radial bore (148) which opens out into the bore (145) and communicates with the bleed orifice (117), and in that a seal (149, 150) which separates the bleed orifice (117) on the one hand from a control chamber (121) subjected to the control pressure ($p_4$) and on the other hand from the inlet (114) is in each case provided between valve body (125) and control plunger (123) on the one hand and between valve body (125) and valve closing member (123) (sic) on the other.

5. Valve according to Claim 4, characterized in that the control chamber (121) is small in volume and the inlet and outlet (14, 15) are designed with a large orifice cross-section.

6. Valve according to one of Claims 2–5, characterized in that the electronic control device (141) is connected spatially to the valve body (125).

## Revendications

1. Valve de commande de pression d'une installation de freinage à milieu de pression, en particulier une installation de freinage à air comprimé, avec une valve relais qui comporte un piston de commande pouvant recevoir la pression de commande venant de la pédale de frein, qui commande la communication entre une sortie pour la liaison d'au moins un cylindre de frein et une admission pour la liaison avec une source de milieu de pression d'un côté, et de l'autre côté une sortie de mise à l'air libre, caractérisée en ce que, grâce au piston de commande (23, 123), un élément de réglage actionnable électroniquement (électro-aimant 34, 134) est couplé mécaniquement à une force de réglage régulable et que cette force de réglage agit à l'encontre de la pression de commande p4.

2. Valve selon la revendication 1, caractérisée en ce que la force de réglage, avantageusement le courant d'excitation de l'électro-aimant (34, 134), est régulable en fonction des paramètres du véhicule, tels que charge par essieu, pression de freins, pression de commande, au moyen d'un système électronique de commande 41.

3. Valve selon la revendication 1 ou 2, caractérisée en ce que la valve relais 113 comporte un élément de valve tubulaire 129 déplaçable à l'encontre de la force d'un ressort de fermeture de valve (130), qui comporte une bride (146) se trouvant au voisinage d'une extrémité, qui coopère avec un siège de valve (128) se trouvant en communication entre une admission (114) et un échappement (115), et un siège de valve d'échappement (133) placé à l'autre extrémité qui coopère avec le piston de commande (134), et en ce que, sur l'élément de réglage, avantageusement sur l'électro-aimant (134), est fixé un poussoir (139) traversant à peu près au centre l'élément de valve tubulaire (129), qui pénètre du côté extrémité dans une cavité du piston de commande (123).

4. Valve selon la revendication 3, caractérisée en ce que l'élément de valve (129) et le piston de commande (123) sont placés dans un alésage (145) d'un corps de valve (125) de façon à pouvoir se déplacer longitudinalement, en ce que le corps de valve (125) comporte à peu près au milieu de l'élément de valve (129) au moins un perçage radial (148) débouchant dans l'alésage (145), qui se trouve en communication avec la sortie de mise à l'air libre (117) et en ce qu'entre le corps de valve (125) et le piston de commande (123), d'un côté, et entre le corps de valve (125) et l'élément de fermeture de valve (123), de l'autre côté, est prévu chaque fois un joint (149, 150) séparant la sortie de mise à l'air libre (117) d'une chambre de commande (121) soumise à la pression de commande p4 d'une part, et d'autre part de l'admission (114).

5. Valve selon la revendication 4, caractérisée en ce que la chambre de commande (121) est de faible volume et que l'admission et l'échappement (14, 15) sont constitués avec une forte section d'ouverture.

6. Valve selon les revendications 2 à 5, caractérisée en ce que le système électronique de commande (141) est relié dans l'espace au corps de valve (125).

Fig.1

EP 0 160 750 B1

Fig.2